# EUROPÄISCHE PATENTSCHRIFT

(11) **EP 4 117 066 B1**
(45) Veröffentlichungstag und Bekanntmachung des Hinweises auf die Patenterteilung: **28.05.2025**
(21) Anmeldenummer: 22163769.7
(22) Anmeldetag: 23.03.2022
(51) Int. Cl.: H01M 10/04, H01M 10/0525, H01M 50/54

(54) **VERFAHREN UND VORRICHTUNG ZUR HERSTELLUNG EINES BAUTEILS FÜR EINE BATTERIEZELLE SOWIE EIN SOLCHES BAUTEIL**
METHOD AND DEVICE FOR MANUFACTURING A COMPONENT FOR A BATTERY CELL AND SUCH A COMPONENT
PROCÉDÉ ET DISPOSITIF DE FABRICATION D'UN COMPOSANT POUR UN ÉLÉMENT DE BATTERIE, AINSI QUE COMPOSANT

(30) Priorität: 30.03.2021 DE 102021108104
(43) Veröffentlichungstag der Anmeldung: 11.01.2023
(73) Patentinhaber: PowerCo SE, 38239 Salzgitter (DE)
(72) Erfinder: Böhm, Dennis, 38302 Wolfenbüttel (DE); Breuer, Alexander, 29227 Celle (DE); Batres Hermosillo, Talia, 38112 Braunschweig (DE)
(74) Vertreter: karo IP

(56) Entgegenhaltungen:
- WO-A1-2021/152080
- DE-A1- 102012 212 941
- DE-A1- 102017 222 490
- DE-A1- 102019 102 233

## Beschreibung

Die Erfindung betrifft ein Verfahren zur Herstellung eines Bauteils (z. B. für eine (Li-Ionen-)Batteriezelle). Das Bauteil umfasst eine Vielzahl von aufeinander gestapelten Zellfolien zur Speicherung elektrischer Energie und mindestens ein Kontaktblech. Die Zellfolien bilden in einem Anbindungsabschnitt einen Folienstapel aus und der Folienstapel ist mit dem Kontaktblech durch mindestens eine Schweißnaht verbunden zur elektrischen Kontaktierung der Zellfolien über das Kontaktblech. Die Erfindung kommt insbesondere bei der Herstellung von Lithium-Ionen-Batterien für beispielsweise elektrifizierte Fahrzeuge zum Einsatz.

Eine Batteriezelle ist ein Stromspeicher, der z. B. in einem Kraftfahrzeug zum Speichern von elektrischer Energie eingesetzt wird. In einer Batteriezelle sind Elektrodenfolien (im Folgenden auch als Zellfolien bezeichnet), also Anoden und Kathoden aufeinander gestapelt angeordnet, wobei unterschiedliche Elektrodenfolien durch Separatorfolien oder ein Separatormaterial voneinander getrennt angeordnet sind. Die Elektrodenfolien sind innerhalb eines Gehäuses in einem Elektrolyt angeordnet.

Die innerhalb des Gehäuses angeordneten Elektrodenfolien werden über sogenannte Ableiter mit einem elektrischen Stromkreis außerhalb des Gehäuses verbunden. Die Ableiter erstrecken sich durch das gasdichte Gehäuse nach außen. Innerhalb des Gehäuses sind die Ableiter mit der Vielzahl von Zellfolien gleicher Art, also Anoden oder Kathoden, elektrisch leitend verbunden. Dabei wird ein Ableiter (im Folgenden auch als Kontaktblech bezeichnet) mit einer Vielzahl von Zellfolien verbunden. Die Zellfolien bilden in einem Anbindungsabschnitt einen Folienstapel aus und der Folienstapel ist mit dem Kontaktblech über eine Schweißverbindung verbunden. Diese Schweißverbindung wird im Allgemeinen durch Laserschweißen und dabei über Punktschweißverbindungen realisiert.

Das hier beschriebene Bauteil umfasst insbesondere die Elektrodenfolien und die Ableiter einer Batteriezelle.

Das Laserstrahlschweißen ist unter den Aspekten der Zugänglichkeit, der Wärmeintragung in das Bauteil bzw. der mechanischen Belastung der Fügepartner das zu favorisierende Fügeverfahren bei der Herstellung von Lithium-Ionen-Zellen und -Batterien. Jedoch ist das reproduzierbare, fehlerfreie Herstellen von Cu-Cu, Al-Al und Al-Cu Verbindungen mittels Laserstrahlschweißen aufgrund der schlechten Einkopplung des Laserlichtes bei einer Wellenlänge von ca. 1050 nm [Nanometer] (Infrarot Laser) und der hohen Wärmeleitfähigkeit der zu schweißenden Werkstoffe stark eingeschränkt. Weiterhin weist Kupfer (Cu) einen Absorptionssprung auf, wenn sich der Aggregatzustand des Werkstoffes von fest zu flüssig ändert. Durch dieses sprunghafte Verhalten kommt es zu einer schlagartigen Überhitzung der Cu-Schmelze, was wiederum zum Verdampfen des Werkstoffes führt. In Folge dessen kommt es zu einer unregelmäßigen Ausformung der Schweißverbindung bzw. zu sehr starker Spritzerbildung. Es entstehen Fehler in der Schweißverbindung, die gerade bei der Ausbildung von längeren Schweißnähten (im Gegensatz zu kurzen Steppnähten mit weniger als 5 Millimeter Schweißnahterstreckung oder Schweißpunkten) zu Löchern, Poren, Auswürfen, Spritzern, nicht angebundenen Folien, etc. führen können. Diese Fehler verringern die Qualität der Batteriezellen und erhöhen das Risiko von Ausfällen im Betrieb der Batteriezellen.

Die für die Erzeugung derartiger Schweißverbindungen unter Großserienbedingungen (also z. B. mehr als 1.000 Bauteile pro Tag) erforderliche Prozessstabilität kann bisher nur für kurze Schweißverbindungen (also Steppnähte oder Schweißpunkte) realisiert werden. Die dabei bereits auftretenden Fehler schränken aber in oben genannter Weise die Nutzung der bisher produzierten Batteriezellen ein.

Gleichzeitig steigt aber mit wachsender Leistungsfähigkeit (z. B. Schnellladefähigkeit der Batteriezellen) der Zellchemie, insbesondere bei gleichen Größen der Batteriezellen, ein Anspruch an Güte und Länge der Schweißverbindung. Insbesondere sind also stoffschlüssige Verbindungen zwischen den Folien und dem Ableiter gefordert, die eine entsprechend große Querschnittsfläche zur Übertragung der gestiegenen Strommengen bereitstellen.

Es besteht also ein Bedürfnis, ein großserientaugliches Verfahren zur Erzeugung derartiger Schweißverbindungen bereitzustellen, insbesondere ein Verfahren, das mit derzeit verfügbaren Laservorrichtungen, also insbesondere mit im Infrarot-Bereich liegenden Laserstrahlen, durchgeführt werden kann.

Aus der DE 10 2019 102 233 A1 ist ein Verfahren zur Herstellung eines Bauteilverbunds durch Laserschweißen bekannt. Dabei ist ein Bereich der durch das Laserschweißen zu verbindenden Bauteile in einer Unterdruckkammer angeordnet. Die Unterdruckkammer deckt dabei z. B. nur einen Bereich der Bauteile ab, in dem die Schweißnaht erzeugt wird.

Aus der DE 10 2018 221 843 A1 ist eine Ultraschweißvorrichtung zum Einbringen einer Prägefläche in einen Metallfolienstapel bekannt. Die Metallfolien werden nachfolgend im Bereich der Prägefläche mittels eines Laserstrahls miteinander verschweißt.

Hiervon ausgehend ist es eine Aufgabe der Erfindung, die im Zusammenhang mit dem Stand der Technik geschilderten Probleme zumindest teilweise zu lösen. Insbesondere sollen ein Verfahren und eine Vorrichtung zur Herstellung eines Bauteils angegeben werden, womit eine hohe Qualität einer Schweißverbindung realisiert werden kann.

Diese Aufgaben werden gelöst durch die Merkmale des unabhängigen Patentanspruchs 1. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Es wird ein Verfahren zur Herstellung eines Bauteils vorgeschlagen. Das Bauteil weist eine Vielzahl von aufeinander gestapelten Zellfolien zur Speicherung elektrischer Energie und mindestens ein Kontaktblech auf. Die Zellfolien bilden in einem Anbindungsabschnitt einen Folienstapel aus und der Folienstapel ist mit dem Kontaktblech durch mindestens eine (durch das Verfahren erzeugte) Schweißnaht verbunden zur elektrischen Kontaktierung der Zellfolien über das Kontaktblech.

Das hier beschriebene Bauteil umfasst insbesondere die Elektrodenfolien und die Ableiter einer Batteriezelle, insbesondere einer Lithium-Ionen Batteriezelle.

Das Verfahren zur Herstellung der mindestens einen Schweißnaht umfasst zumindest die folgenden Schritte:
a) Bereitstellen der Zellfolien und Anordnen des Folienstapels mit einer Stapelhöhe;
b) Bereitstellen des Kontaktblechs;
c) Kompaktieren zumindest des Folienstapels durch eine Kompaktionsvorrichtung;
d) Anordnen des Folienstapels und des Kontaktblechs zueinander in einer Verbindungsposition;
e) Erzeugen eines Unterdrucks zumindest in einem Verbindungsbereich des Folienstapels und des Kontaktblechs durch eine Unterdruckvorrichtung;
f) Verbinden des Folienstapels mit dem Kontaktblech in dem Verbindungsbereich über die mindestens eine durch ein Laserschweißverfahren bei Vorliegen des Unterdrucks erzeugte Schweißnaht.

Die obige (nicht abschließende) Einteilung der Verfahrensschritte in a) bis f) soll vorrangig nur zur Unterscheidung dienen und keine Reihenfolge und/oder Abhängigkeit erzwingen. Auch die Häufigkeit der Verfahrensschritte z. B. kann variieren. Ebenso ist möglich, dass Verfahrensschritte einander zumindest teilweise zeitlich überlagern. Ganz besonders bevorzugt finden die Verfahrensschritte e) und f) zumindest teilweise zeitlich parallel statt. Insbesondere wird Schritt c) unmittelbar vor oder aber unmittelbar nach Schritt d) durchgeführt. Entweder wird also der Folienstapel alleine oder zusammen mit dem Kontaktblech kompaktiert. Insbesondere wird während Schritt f) der gemäß Schritt e) erzeugte Unterdruck aufrechterhalten. Insbesondere werden die Schritte a) bis f) in der angeführten Reihenfolge durchgeführt.

Das Bauteil ist insbesondere zur Speicherung elektrischer Energie geeignet. Bei dem Bauteil kann es sich beispielsweise um ein Bauteil für eine (wiederaufladbare) Lithium-Ionen-Batterie handeln. In diesem Zusammenhang kann das Bauteil zum Beispiel einen Bestandteil für eine (Lithium-Ionen-)Zelle bilden. Das Bauteil umfasst zumindest mindestens einen Zellstapel zur Speicherung elektrischer Energie und mindestens ein Kontaktblech zur elektrischen Kontaktierung des mindestens einen Zellstapels. In der Regel können nach dem hier beschriebenen Verbinden von Zellstapel und Kontaktblech mehrere so hergestellte Bauteile zu einer Batteriezelle verbunden werden. Das Bauteil kann einen einzelnen Zellstapel umfassen. Weiterhin kann das Bauteil (genau) zwei Kontaktbleche (oder sogar mehr als zwei) umfassen.

Das Verfahren dient insbesondere dazu, das Kontaktblech mit dem (jeweils einem einzelnen) Folienstapel elektrisch leitend zu verbinden, sodass über das Kontaktblech der mindestens eine Folienstapel mit einem Stromkreis verbindbar ist. Das Kontaktblech bildet beispielswiese einen elektrische Anschluss des Bauteils bzw. ein elektrisches Verbindungselement des Bauteils zur Verbindung des Bauteils mit bauteilexternen Komponenten oder weiteren Bauteilen.

Gemäß Schritt a) erfolgt ein Bereitstellen der Zellfolien und ein Anordnen des Folienstapels mit einer Stapelhöhe. Insbesondere sind die Zellfolien außerhalb des jeweiligen

Anbindungsabschnitts mit einer Beschichtung (z. B. Aktivmaterial) versehen, wobei die Anbindungsabschnitte (also jeder Zellfolie), die insbesondere unbeschichtet sind, zu einem Folienstapel mit einer Stapelhöhe angeordnet werden. Insbesondere umfasst der Folienstapel mindestens 10, bevorzugt mindestens 20, besonders bevorzugt mindestens 30 oder sogar mindestens 50 oder mindestens 75, Zellfolien bzw. Anbindungsabschnitte. In dem Anbindungsabschnitt werden die Zellfolien im Folgenden auch als Folien bezeichnet.

Gemäß Schritt b) erfolgt ein Bereitstellen des Kontaktblechs.

Gemäß Schritt c) erfolgt ein Kompaktieren des Folienstapels durch eine Kompaktionsvorrichtung.

Gemäß Schritt d) erfolgt ein Anordnen des Folienstapels und des Kontaktblechs zueinander in einer Verbindungsposition. In dieser Verbindungsposition werden der Folienstapel und das Kontaktblech in Schritt f) miteinander verschweißt. Dabei kann der Folienstapel auf einer Seite des Kontaktbleches oder gleichmäßig oder unterschiedlich aufgeteilt auf beiden Seiten des Kontaktblechs angeordnet werden

Ggf. kann nach Schritt b) und vor Schritt c) gemäß Schritt d) auch das Kontaktblech bereits an dem Folienstapel angeordnet werden, so dass gemäß Schritt c) ein Kompaktieren des Folienstapels und des Kontaktblechs erfolgt.

Infolge des Kompaktierens wird Luft aus dem Folienstapel bzw. zwischen Folienstapel und Kontaktblech verdrängt. Diese Luft kann sonst insbesondere während Schritt f) zu Fehlern bzw. Störungen in der Schweißnaht führen. Das Kompaktieren erfolgt erfindungsgemäß durch Beaufschlagen des Folienstapels sowie ggf. zusätzlich des Kontaktblechs mit einem Druck, der mit einer Ultraschallanregung überlagert wird. Mittels der Ultraschallanregung werden die einzelnen Komponenten zumindest gegeneinander verlagert und bewegt, so dass Luft sukzessive verdrängt wird.

Der Druck, mit dem die Kompaktionsvorrichtung auf das Bauteil einwirkt, umfasst insbesondere an der Kontaktstelle zwischen Kompaktionsvorrichtung und Bauteil (also Folienstapel oder ggf. Kontakblech) zwischen 0,75 bis 2 bar.

Die Ultraschallanregung umfasst insbesondere eine Schwingung quer zur Fügeebene zwischen den Folien des Folienstapels bzw. dem Kontaktblech und/ oder eine Schwingung parallel zur Fügeebene. Die Frequenz beträgt bevorzugt 20 kHz [KiloHertz], bevorzugt höchstens 40 kHz. Die Frequenz beträgt insbesondere mindestens 6 kHz. Die Amplitude der Ultraschallanregung am Kontakt zwischen der Ultraschallvorrichtung und dem Bauteil beträgt insbesondere höchstens 60 µm [Mikrometer], bevorzugt höchstens 20 µm.

Eine stoffschlüssige Verbindung zwischen den Folien des Folienstapels und ggf. dem Kontaktblech erfolgt bei dem Kompaktieren insbesondere nicht. Insbesondere werden die Folien und ggf. das Kontaktblech infolge der Ultraschallanregung aber formschlüssig miteinander verbunden, in dem die aneinander angeordneten Oberflächen kleinste derartige Verbindungen miteinander ausbilden.

Bevorzugt werden die Folien des Folienstapels und ggf. das Kontaktblech durch das Kompaktieren zumindest teilweise stoffschlüssig miteinander verbunden.

Gemäß Schritt e) erfolgt ein Erzeugen eines Unterdrucks zumindest in einem Verbindungsbereich des Folienstapels und des Kontaktblechs durch eine Unterdruckvorrichtung. Mit der Unterdruckvorrichtung wird insbesondere Luft aus dem Bereich der zu erzeugenden Schweißnaht entfernt.

Gemäß Schritt f) erfolgt ein Verbinden des Folienstapels mit dem Kontaktblech in dem Verbindungsbereich über mindestens eine durch ein Laserschweißverfahren bei Vorliegen des Unterdrucks erzeugte Schweißnaht, insbesondere eine Punkt-, Stepp- oder Liniennaht. Die Schweißnaht weist insbesondere eine Länge entlang einer Schweißrichtung von mindestens 5 Millimetern, bevorzugt von mindestens 10 Millimetern, besonders bevorzugt von mindestens 50 Millimetern auf.

Insbesondere erfolgt die Einkopplung des Laserstrahls über das Kontaktblech oder über den Folienstapel. Bevorzugt erfolgt die Einkopplung über den Folienstapel, so dass die Anbindung des Kontaktblechs nur über den Folienstapel erfolgt.

Infolge der hohen Qualität der durch das vorgeschlagene Verfahren erzeugbaren Schweißnaht kann die Wurzel einer Schweißnaht auch an einer Folie des Folienstapels angeordnet sein.

Insbesondere ist auf der von der Laserquelle abgewandten Seite des Verbindungsbereichs eine Folie und nicht das Kontaktblech angeordnet.

Insbesondere werden die in Schritt c) durch Kompaktieren miteinander verbundenen Komponenten (Folien und ggf. Kontaktblech) zumindest bis hin zum Schritt e), bevorzugt auch bis hin zum Schritt f) durch eine Haltevorrichtung in der Verbindungsposition fixiert. Damit soll insbesondere verhindert werden, dass die durch das Kompaktieren erzeugten Verbindungen zwischen einzelnen Komponenten z. B. durch einen Transport des Bauteils (wieder) gelöst werden. Die Haltevorrichtung umfasst insbesondere ein Klemmen dieser Komponenten.

Die Schweißnaht wird insbesondere ausschließlich in dem Bereich des Folienstapels bzw. des Kontaktbleches angeordnet, in dem in Schritt c) die Verbindung durch Kompaktieren erzeugt wurde.

Es hat sich im Rahmen der vorliegenden Erfindung erstmals gezeigt, dass nur durch eine Kombination der Schritte c) Kompaktieren und e) Erzeugen eines Unterdrucks eine Schweißnaht hoher Qualität erzeugbar ist. Insbesondere konnten so erstmals bestimmte Qualitätsmerkmale der Schweißnaht erzeugt werden.

Insbesondere umfasst die Unterdruckvorrichtung zumindest eine Kammer, in der zumindest der Folienstapel und das Kontaktblech angeordnet sind. Durch das Anordnen des Folienstapels und des Kontaktblechs in der Kammer kann Luft ggf. auch aus den Bereichen zwischen den Folien des Folienstapels bzw. zwischen dem Folienstapel und dem Kontaktblech entfernt werden. Allerdings ist so das Volumen der Kammer recht groß und es müssen damit große Mengen Luft, ggf. für jedes Bauteil, entfernt werden.

Insbesondere umfasst die Unterdruckvorrichtung einen ersten Vorrichtungsteil und einen zweiten Vorrichtungsteil, die jeweils eine Dichtfläche mit zumindest dem Folienstapel oder dem Kontaktblech ausbilden. Damit bildet die Unterdruckvorrichtung zumindest zwei Kammern aus, in denen jeweils zumindest ein Unterdruck erzeugt wird. Jede Kammer wird zumindest teilweise zumindest durch den Folienstapel oder durch das Kontaktblech gebildet.

Bei dieser Ausführung der Unterdruckvorrichtung sind also die Bereiche zwischen den Folien bzw. zwischen Folienstapel und Kontaktblech außerhalb der Unterdruckvorrichtung angeordnet. Infolge des Kompaktierens des Folienstapels und ggf. des Kontaktbleches kann jedoch Luft soweit aus diesen Bereichen entfernt werden, dass dadurch die Qualität der Schweißverbindung nicht beeinträchtigt wird. Das Volumen des jeweiligen Vorrichtungsteils kann sehr klein ausgeführt werden, so dass nur eine geringe Menge Luft entfernt werden muss.

Die jeweilige Dichtfläche ist insbesondere vollständig auf dem Folienstapel und/oder dem Kontaktblech angeordnet und umfasst damit einen Flächenausschnitt, der unter Berücksichtigung der Lage und der Länge der Schweißverbindung möglichst klein ausgeführt ist.

Insbesondere ist der Folienstapel durch eine Vielzahl aufeinander angeordneter Folien gebildet, wobei jede Folie eine erste Dicke aufweist und die aufeinander gestapelten Folien mit der jeweils ersten Dicke die Stapelhöhe bilden. Die erste Dicke beträgt zwischen 4 und 30 µm [Mikrometer] und jede Folie des Folienstapels umfasst zumindest zu 99,0 Gew.-% entweder Kupfer oder Aluminium. Insbesondere beträgt die erste Dicke zwischen 4 µm und 15 µm, bevorzugt höchstens 10 µm.

Insbesondere umfasst jede Folie höchstens 0,5 Gew.-% Sauerstoff, bevorzugt höchstens 0,1 Gew.-%.

Insbesondere wird die Stapelhöhe durch mindestens zehn aufeinander gestapelte Folien gebildet. Insbesondere umfasst der Folienstapel mindestens 10, bevorzugt mindestens 20, besonders bevorzugt mindestens 30, Zellfolien bzw. Anbindungsabschnitte.

Insbesondere weist das Kontaktblech in dem Verbindungsbereich eine zweite Dicke auf, die zwischen 0,2 und 3 Millimeter beträgt und zumindest zu 99,0 Gew.-% entweder Kupfer oder Aluminium umfasst. Insbesondere beträgt die zweite Dicke zwischen 20 µm und 1 (einem) Millimeter, bevorzugt zwischen 50 µm und 500 µm.

Insbesondere umfasst das Kontaktblech höchstens 0,5 Gew.-% Sauerstoff, bevorzugt höchstens 0,1 Gew.-%.

Insbesondere weist das Kontaktblech eine Beschichtung auf, die eine dritte Dicke von höchstens 2 µm aufweist und die zumindest zu 99,0 Gew.-% Nickel umfasst. Die dritte Dicke beträgt insbesondere mindestens 0,1 µm.

Insbesondere beträgt der Unterdruck im Verbindungsbereich und/ oder in jeder Kammer weniger als 30 mbar [Millibar], bevorzugt weniger als 20 mbar, besonders bevorzugt weniger als 10 mbar. Insbesondere kann der Unterdruck mehr als 5 mbar betragen.

Insbesondere wird die mindestens eine Schweißnaht durch einen Laserstrahl mit einer Wellenlänge am Bauteil zwischen 1.030 bis 1.060 nm [Nanometer] erzeugt.

Insbesondere wird die mindestens eine Schweißnaht durch einen Laserstrahl mit einer Wellenlänge am Bauteil zwischen 490 und 575 nm [Nanometer] oder sogar zwischen 405 und 490 nm erzeugt.

Es wird ein Bauteil vorgestellt, zumindest umfassend eine Vielzahl von aufeinander gestapelten Zellfolien zur Speicherung elektrischer Energie und mindestens ein Kontaktblech. Die Zellfolien bilden in einem Anbindungsabschnitt einen Folienstapel aus und der Folienstapel ist mit dem Kontaktblech durch mindestens eine Schweißnaht in einer Stumpfstoßverbindung oder einer Überlappverbindung verbunden. Die mindestens eine Schweißnaht ist durch das beschriebene Verfahren hergestellt. Die Schweißnaht erstreckt sich entlang einer Schweißrichtung über eine Länge hinweg und weist quer zur Schweißrichtung einen Querschnitt auf. Das Bauteil weist in dem Querschnitt und unmittelbar benachbart zur Schweißnaht eine erste Materialstärke auf und für zumindest 30 % der entlang der Schweißnaht vorliegenden Querschnitte gelten alle der folgenden Bedingungen:
- wenn der Folienstapel und das Kontaktblech jeweils zu mindestens 99,0 % Kupfer umfassen:
   ∘ eine minimale zweite Materialstärke der Schweißnaht beträgt mindestens 70 %, insbesondere mindestens 80 %, bevorzugt mindestens 90 %, der ersten Materialstärke;
   o eine Pore hat einen größten Durchmesser von höchstens 0,02 Millimeter, insbesondere von höchstes 0,01 Millimeter;
   o eine Porosität der Schweißnaht beträgt höchstens 20 %, insbesondere höchstens 10 %, bevorzugt höchstens 5 %, besonders bevorzugt höchstens 2 %;
- wenn der Folienstapel und das Kontaktblech jeweils zu mindestens 99,0 % Aluminium umfassen:
   o eine minimale zweite Materialstärke der Schweißnaht beträgt mindestens 80 % der ersten Materialstärke, insbesondere mindestens 90 %, bevorzugt mindestens 95 %;
   o eine Pore hat einen größten Durchmesser von höchstens 0,04 Millimeter, insbesondere von höchstens 0,02 Millimeter, bevorzugt von höchstes 0,01 Millimeter;
   ∘ eine Porosität der Schweißnaht beträgt höchstens 20 %, insbesondere höchstens 10 %, bevorzugt höchstens 5 %, besonders bevorzugt höchstens 2 %;
   o mindestens 50 %, bevorzugt mindestens 75 %, besonders bevorzugt mindestens 85 % oder sogar mindestens 95 %, der Folien des Folienstapels sind an die Schweißnaht angebunden.

Die erste Materialstärke umfasst insbesondere den Folienstapel oder das Kontaktblech (bei einer Stumpfstoßverbindung) oder den Folienstapel und das Kontaktblech (bei einer Überlappverbindung) bzw. deren Dicke; wobei nur das Material der Komponente der ersten Materialstärke zugerechnet wird (ohne dazwischen angeordnete Freiräume bzw. Luft). Bei einer Stumpfstoßverbindung sind in bekannter Weise die miteinander über die Schweißnaht zu verbindenden Komponenten mit einander gegenüberliegenden Stirnseiten einander kontaktierend oder durch einen Schweißspalt beanstandet zueinander angeordnet. Bei einer Überlappverbindung sind die über die Schweißnaht zu verbindenden Komponenten aufeinander angeordnet und die Schweißnaht durchdringt die oben (hin zur Strahlquelle) angeordnete Komponente bis hinein in die untere Komponente. Insbesondere ist bei der Überlappverbindung das Kontaktblech auf der unteren Seite angeordnet.

Die minimale zweite Materialstärke ist insbesondere die geringste Erstreckung der Schweißnaht in dem Querschnitt entlang der Richtung der Dicke bzw. der Materialstärke. Dabei werden Poren, also Luft- bzw. Gaseinschlüsse der zweiten Materialstärke zugerechnet.

Jeder Querschnitt erstreckt sich hier quer zur Schweißrichtung und parallel zur Materialstärke bzw. Dicke der jeweiligen Komponente. Der Querschnitt verläuft also jeweils senkrecht zur jeweiligen größten Seitenfläche der Komponenten. Der Querschnitt kann durch übliche Querschliffe der Schweißnaht ausgewertet werden. Insbesondere sollte dabei eine mindestens 100-fache, bevorzugt eine mindestens 500-fache, besonders bevorzugt eine mindestens 1.000-fache, Vergrößerung des Querschnitts betrachtet werden.

Insbesondere gilt bzw. gelten, wenn der Folienstapel und das Kontaktblech jeweils zu mindestens 99,0 % Kupfer umfasst, zusätzlich zumindest eine, bevorzugt mindestens zwei oder sogar mindestens drei, der folgenden Bedingungen:
- bei der Überlappverbindung ist eine (kürzeste) Verbindungslinie (durch die Schweißnaht) zwischen dem Folienstapel und dem Kontaktblech (bzw. entlang der Trennlinie zwischen Folienstapel und Kontaktblech) porenfrei (insbesondere weniger als 1 % Porosität);
- die erste Materialstärke beträgt mindestens einen Millimeter, bevorzugt mindestens 1,5 Millimeter, und eine Überhöhung einer Wurzel der Schweißnaht beträgt höchstens 0,04 Millimeter, bevorzugt höchstens 0,02 Millimeter;
- die erste Materialstärke beträgt mindestens einen Millimeter, bevorzugt mindestens 1,5 Millimeter, und eine Unterwölbung einer Wurzel der Schweißnaht beträgt höchstens 0,1 Millimeter, bevorzugt höchstens 0,05 Millimeter;
- die erste Materialstärke beträgt mindestens einen Millimeter, bevorzugt mindestens 1,5 Millimeter, und eine Überhöhung einer Decklage der Schweißnaht beträgt höchstens 0,02 Millimeter, bevorzugt höchstens 0,01 Millimeter;
- die erste Materialstärke beträgt mindestens einen Millimeter, bevorzugt mindestens 1,5 Millimeter, und eine Unterwölbung einer Decklage der Schweißnaht beträgt höchstens 0,06 Millimeter, bevorzugt höchstens 0,03 Millimeter;
- die Schweißnaht ist zumindest rissfrei oder randkerbenfrei oder wurzelkerbenfrei;
- mindestens 50 %, bevorzugt mindestens 75 %, besonders bevorzugt mindestens 85 % oder sogar mindestens 95 %, der Folien des Folienstapels sind an die Schweißnaht angebunden.

Insbesondere gilt bzw. gelten, wenn der Folienstapel und das Kontaktblech jeweils zu mindestens 99,0 % Aluminum umfasst, zusätzlich zumindest eine, bevorzugt mindestens zwei oder sogar mindestens drei, der folgenden Bedingungen:
- bei der Überlappverbindung ist eine Verbindungslinie dem Folienstapel und dem Kontaktblech porenfrei (insbesondere weniger als 1 % Porosität);
- die erste Materialstärke beträgt mindestens einen Millimeter, bevorzugt mindestens 1,5 Millimeter, und eine Überhöhung einer Wurzel der Schweißnaht beträgt höchstens 0,07 Millimeter, bevorzugt höchstens 0,03 Millimeter;
- die erste Materialstärke beträgt mindestens einen Millimeter, bevorzugt mindestens 1,5 Millimeter, und eine Unterwölbung einer Wurzel der Schweißnaht beträgt höchstens 0,05 Millimeter, bevorzugt höchstens 0,02 Millimeter;
- die erste Materialstärke beträgt mindestens einen Millimeter, bevorzugt mindestens 1,5 Millimeter, und eine Überhöhung einer Decklage der Schweißnaht beträgt höchstens 0,02 Millimeter, bevorzugt höchstens 0,01 Millimeter;
- die erste Materialstärke beträgt mindestens einen Millimeter, bevorzugt mindestens 1,5 Millimeter, und eine Unterwölbung einer Decklage der Schweißnaht beträgt höchstens 0,02 Millimeter, bevorzugt höchstens 0,01 Millimeter;
- die Schweißnaht ist zumindest rissfrei oder randkerbenfrei oder wurzelkerbenfrei.

Eine Überhöhung einer Wurzel ist insbesondere ein Überstand der Schweißnaht im betrachteten Querschnitt gegenüber einer gedachten Gerade zwischen der jeweiligen, zur

Schweißnaht unmittelbar benachbarten Unterseite (also weg von der Strahlquelle orientiert) der durch die Schweißnaht verbundenen Komponenten.

Eine Unterwölbung einer Wurzel ist insbesondere ein Unterstand der Schweißnaht im betrachteten Querschnitt gegenüber einer gedachten Gerade zwischen der jeweiligen, zur Schweißnaht unmittelbar benachbarten Unterseite der durch die Schweißnaht verbundenen Komponenten.

Eine Überhöhung einer Decklage ist insbesondere ein Überstand der Schweißnaht im betrachteten Querschnitt gegenüber einer gedachten Gerade zwischen der jeweiligen, zur Schweißnaht unmittelbar benachbarten Oberseite (also hin zu der Strahlquelle orientiert) der durch die Schweißnaht verbundenen Komponenten.

Eine Unterwölbung einer Decklage ist insbesondere ein Unterstand der Schweißnaht im betrachteten Querschnitt gegenüber einer gedachten Gerade zwischen der jeweiligen, zur Schweißnaht unmittelbar benachbarten Oberseite der durch die Schweißnaht verbundenen Komponenten.

Rissfrei heißt insbesondere, dass keine Risse, also Spalte innerhalb des Materials der Schweißnaht, in dem betrachteten Querschnitt erkennbar sind bzw. vorliegen.

Randkerben sind insbesondere Unterwölbungen im Übergang zwischen Schweißnaht und der Oberseite der Komponente.

Wurzelkerben sind insbesondere Unterwölbungen im Übergang zwischen Schweißnaht und der Unterseite der Komponente.

Es wird weiter eine Vorrichtung zur Herstellung eines Bauteils vorgeschlagen, wobei das Bauteil eine Vielzahl von aufeinander gestapelten Zellfolien zur Speicherung elektrischer Energie und mindestens ein Kontaktblech aufweist. Die Zellfolien bilden in einem Anbindungsabschnitt einen Folienstapel aus und der Folienstapel ist mit dem Kontaktblech durch mindestens eine Schweißnaht verbunden zur elektrischen Kontaktierung der Zellfolien über das Kontaktblech. Die Vorrichtung ist zur Durchführung des beschriebenen Verfahrens geeignet ausgeführt und umfasst zur Herstellung der mindestens einen Schweißnaht zumindest
- eine Kompaktionsvorrichtung zum Kompaktieren zumindest des Folienstapels,
- eine Unterdruckvorrichtung zum Erzeugen eines Unterdrucks zumindest in einem Verbindungsbereich des Folienstapels und des Kontaktblechs sowie
- eine Laservorrichtung zum Verbinden des Folienstapels mit dem Kontaktblech in dem Verbindungsbereich über mindestens eine durch ein Laserschweißverfahren bei Vorliegen des Unterdrucks erzeugte Schweißnaht.

Die Vorrichtung wird insbesondere zur Durchführung des hier beschriebenen Verfahrens und/oder zur Herstellung des hier beschriebenen Bauteils eingesetzt und ist geeignet eingerichtet. Die Unterdruckvorrichtung kann z. B. mindestens einen Vakuum- bzw. Unterdruckanschluss, z. B. je Kammer, und/oder mindestens eine Vakuum-Pumpe umfassen.

Die Laservorrichtung kann mindestens eine Laser-Quelle, insbesondere eine Infrarot-Laser-Quelle umfassen.

Die im Zusammenhang mit dem Verfahren erörterten Details, Merkmale und vorteilhaften Ausgestaltungen können entsprechend auch bei dem hier vorgestellten Bauteil und/oder der Vorrichtung auftreten und umgekehrt. Insoweit wird auf die dortigen Ausführungen zur näheren Charakterisierung der Merkmale vollumfänglich Bezug genommen.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Querschnitt durch eine Schweißnaht, die durch ein bekanntes Verfahren erzeugt wurde, im Schnitt;
- Fig. 2:: einen Querschnitt durch eine weitere Schweißnaht, die durch ein bekanntes Verfahren erzeugt wurde, im Schnitt;
- Fig. 3:: eine erste Ausführungsvariante einer Vorrichtung mit einem Bauteil in einer Draufsicht gemäß der Schritte e) und f);
- Fig. 4:: die Vorrichtung nach Fig. 3 gemäß Schritt c) in einer Seitenansicht;
- Fig. 5:: die Vorrichtung nach Fig. 3 gemäß der Schritte e) und f) in einer Seitenansicht;
- Fig. 6:: eine zweite Ausführungsvariante einer Vorrichtung gemäß der Schritte e) und f) in einer Seitenansicht;
- Fig. 7:: einen Querschnitt durch eine Schweißnaht, die durch das beschriebene Verfahren erzeugt wurde, im Schnitt; und
- Fig. 8:: einen Querschnitt durch eine weitere Schweißnaht, die durch das beschriebene Verfahren erzeugt wurde, im Schnitt.

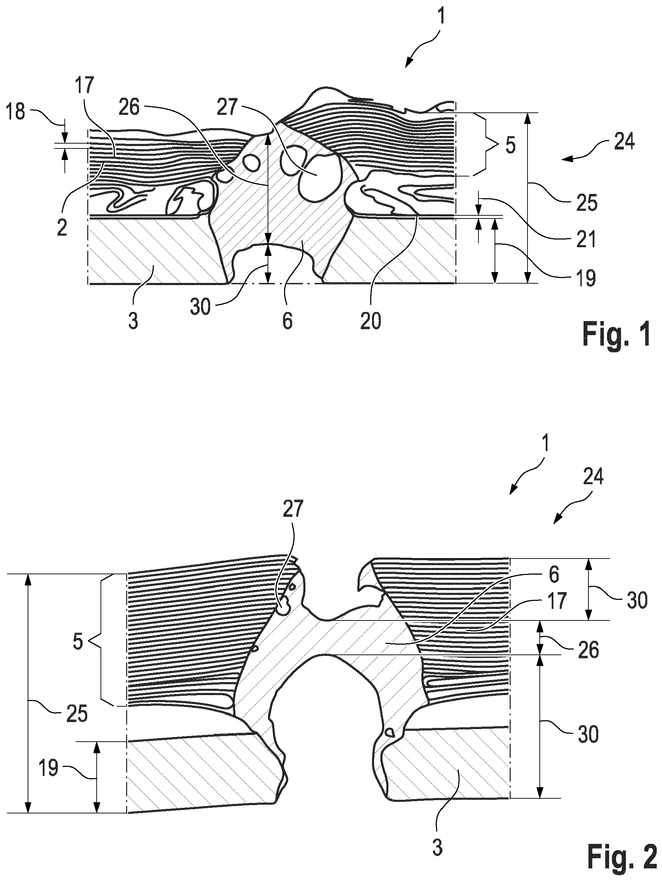

Fig. 1 zeigt einen Querschnitt 24 durch eine Schweißnaht 6, die durch ein bekanntes Verfahren erzeugt wurde, im Schnitt. Das Bauteil 1 umfasst ein Kontaktblech 3 mit einer zweiten Dicke 19 und einen Folienstapel 5, die eine Überlappverbindung ausbilden. Der Folienstapel 5 bildet dabei eine Oberseite und ist hin zur Strahlquelle orientiert. Die Schweißnaht 6 umfasst große Poren 27, eine hohe Porosität, sowie eine starke Unterwölbung 30 der Wurzel der Schweißnaht 6. Die zweite Materialstärke 26 ist deutlich geringer als die erste Materialstärke 25.

Die erste Materialstärke 25 ist hier nur angedeutet dargestellt, da die Luft bzw. Freiräume zur Bestimmung der ersten Materialstärke herauszurechnen sind.

Das Material der Folien 17 des Folienstapels 5 und das Material des Kontaktblechs 3 umfasst jeweils zu mindestens 99,0 % Aluminium. Die Folien 17 weisen jeweils eine erste Dicke 18 auf.

Eine Beschichtung 20 des Kontaktblechs 3 mit einer dritten Dicke 21 ist hier nur angedeutet.

Fig. 2 zeigt einen Querschnitt 24 durch eine weitere Schweißnaht 6, die durch ein bekanntes Verfahren erzeugt wurde, im Schnitt. Das Bauteil 1 umfasst ein Kontaktblech 3 und einen Folienstapel 5, die eine Überlappverbindung ausbilden. Der Folienstapel 5 bildet dabei eine Oberseite und ist hin zur Strahlquelle orientiert. Die Schweißnaht 6 umfasst große Poren 27, eine hohe Porosität, sowie eine starke Unterwölbung 30 der Wurzel (an der Unterseite des Bauteils 1) sowie der Decklage (an der Oberseite des Bauteils 1) der Schweißnaht 6. Die zweite Materialstärke 26 ist deutlich geringer als die erste Materialstärke 25. Nur eine geringe Anzahl der Folien 2 sind über die Schweißnaht 6 an das Kontaktbleich 3 angebunden.

Die erste Materialstärke 25 ist hier nur angedeutet dargestellt, da die Luft bzw. Freiräume zur Bestimmung der ersten Materialstärke herauszurechnen sind.

Das Material der Folien 17 des Folienstapels 5 und das Material des Kontaktblechs 3 umfasst jeweils zu mindestens 99,0 % Kupfer. Die Folien 17 weisen jeweils eine erste Dicke 18 auf.

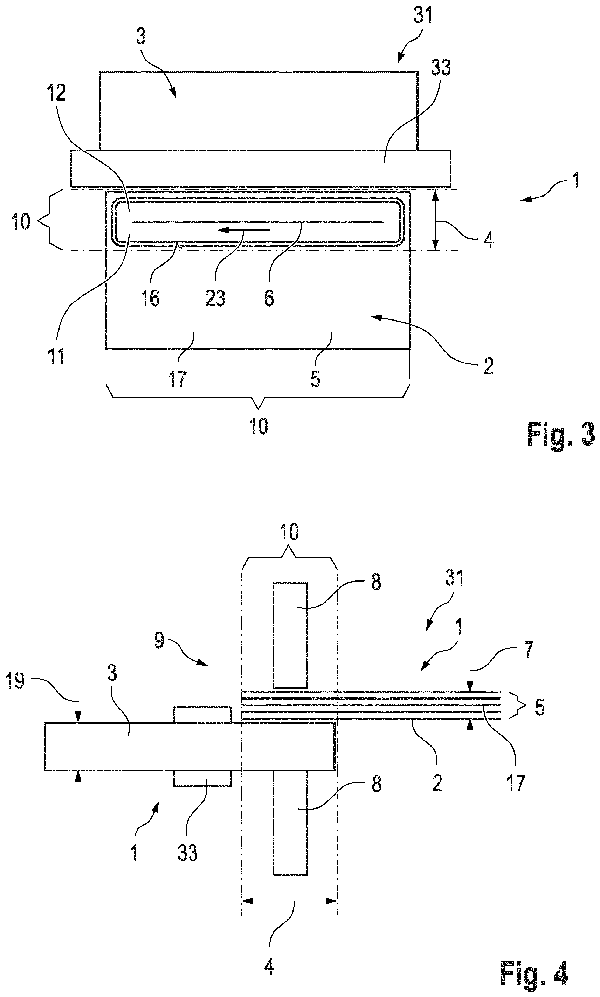

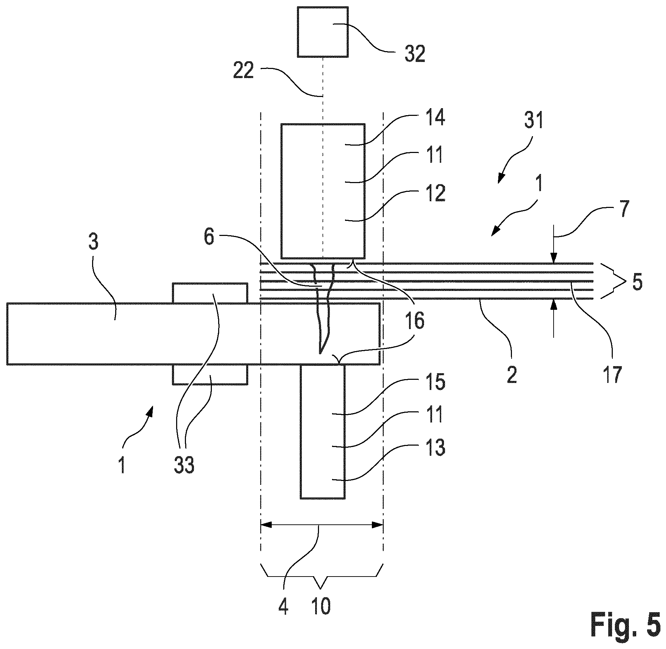

Fig. 3 zeigt eine erste Ausführungsvariante einer Vorrichtung 31 mit einem Bauteil 1 in einer Draufsicht gemäß der Schritte e) und f). Fig. 4 zeigt die Vorrichtung 31 nach Fig. 3 gemäß Schritt c) in einer Seitenansicht. Fig. 5 zeigt die Vorrichtung 31 nach Fig. 3 gemäß der Schritte e) und f) in einer Seitenansicht. Die Fig. 3 bis 5 werden im Folgenden gemeinsam beschrieben.

Das Bauteil 1 weist eine Vielzahl von aufeinander gestapelten Zellfolien 2 zur Speicherung elektrischer Energie und mindestens ein Kontaktblech 3 auf. Die Zellfolien 2 bilden in einem Anbindungsabschnitt 4 einen Folienstapel 5 aus und der Folienstapel 5 ist mit dem Kontaktblech 3 durch eine Schweißnaht 6 verbunden zur elektrischen Kontaktierung der Zellfolien 2 über das Kontaktblech 3. Die Schweißnaht 6 ist benachbart zu einer Siegelnaht 33 der Batteriezelle angeordnet, durch die das Gehäuse der Batteriezelle abgedichtet wird. Die Schweißnaht 6 ist später innerhalb des Gehäuses der Batteriezelle angeordnet, so dass sich das Kontaktblech 3 ausgehend von der Schweißnaht 6 über die Siegelnaht 33 nach außerhalb des Gehäuses erstreckt.

Die Vorrichtung 31 ist zur Durchführung des beschriebenen Verfahrens geeignet ausgeführt und umfasst zur Herstellung der mindestens einen Schweißnaht 6 eine Kompaktionsvorrichtung 8 zum Kompaktieren zumindest des Folienstapels 5, eine Unterdruckvorrichtung 11 zum Erzeugen eines Unterdrucks zumindest in einem Verbindungsbereich 10 des Folienstapels 5 und des Kontaktblechs 3 sowie eine Laservorrichtung 32 zum Verbinden des Folienstapels 5 mit dem Kontaktblech 3 in dem Verbindungsbereich 10 über mindestens eine durch ein Laserschweißverfahren bei Vorliegen des Unterdrucks erzeugte Schweißnaht 6.

Das Verfahren dient dazu, das Kontaktblech 3 mit dem Folienstapel 5 elektrisch leitend zu verbinden, sodass über das Kontaktblech 3 der Folienstapel 5 mit einem Stromkreis verbindbar ist. Das Kontaktblech 3 bildet einen elektrische Anschluss des Bauteils 1 bzw. ein elektrisches Verbindungselement des Bauteils 1 zur Verbindung des Bauteils 1 mit bauteilexternen Komponenten oder weiteren Bauteilen 1.

Gemäß Schritt a) erfolgt ein Bereitstellen der Zellfolien 2 und ein Anordnen des Folienstapels 5 mit einer Stapelhöhe 7. Gemäß Schritt b) erfolgt ein Bereitstellen des Kontaktblechs 3. Kontaktblech 3 und Folienstapel 5 werden gemäß Schritt d) in einer Verbindungsposition 9 (hier für eine Überlappverbindung) angeordnet. Gemäß Schritt c) erfolgt ein Kompaktieren des Folienstapels 5 und des Kontaktblechs 3 durch eine Kompaktionsvorrichtung 8 (siehe Fig. 4). In dieser Verbindungsposition 9 werden der Folienstapel 5 und das Kontaktblech 3 in Schritt f) durch Beaufschlagen des Verbindungsbereichs 10 mit dem Laserstrahl 22 miteinander verschweißt.

Das Kompaktieren erfolgt durch Beaufschlagen des Folienstapels 5 sowie zusätzlich des Kontaktblechs 3 durch einen Druck, der mit einer Ultraschallanregung überlagert wird (Fig. 4). Mittels der Ultraschallanregung werden die einzelnen Komponenten 2, 3, 5, 17 zumindest gegeneinander verlagert und bewegt, so dass Luft sukzessive verdrängt wird.

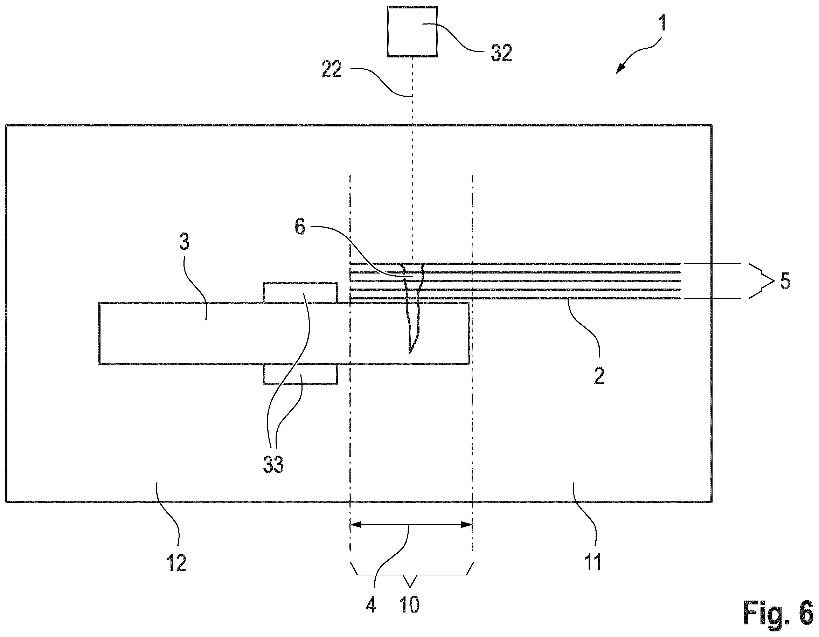

Gemäß Schritt e) erfolgt ein Erzeugen eines Unterdrucks in einem Verbindungsbereich 10 des Folienstapels 5 und des Kontaktblechs 3 durch eine Unterdruckvorrichtung 11. Mit der Unterdruckvorrichtung 11 wird Luft aus dem Bereich der zu erzeugenden Schweißnaht 6 entfernt (siehe Fig. 5 und 6).

Die Unterdruckvorrichtung 11 umfasst einen ersten Vorrichtungsteil 14 und einen zweiten Vorrichtungsteil 15, die jeweils eine Dichtfläche 16 mit dem Folienstapel 5 oder dem Kontaktblech 3 ausbilden. Damit bildet die Unterdruckvorrichtung 11 zwei Kammern 12, 13 aus, in denen jeweils zumindest ein Unterdruck erzeugt wird. Die erste Kammer 12 wird durch den ersten Vorrichtungsteil 14 und den Folienstapel 5 und die zweite Kammer 13 durch den zweiten Vorrichtungsteil 15 und das Kontaktblech 3 gebildet.

Bei dieser Ausführung der Unterdruckvorrichtung 11 sind also die Bereiche zwischen den Folien 17 bzw. zwischen Folienstapel 5 und Kontaktblech 3 außerhalb der Unterdruckvorrichtung 11 angeordnet. Infolge des Kompaktierens des Folienstapels 5 und des Kontaktbleches 3 kann jedoch Luft soweit aus diesen Bereichen entfernt werden, dass dadurch die Qualität der Schweißverbindung nicht beeinträchtigt wird. Das Volumen des jeweiligen Vorrichtungsteils 14, 15 kann sehr klein ausgeführt werden, so dass nur eine geringe Menge Luft entfernt werden muss.

Die jeweilige Dichtfläche 16 ist vollständig auf dem Folienstapel 5 bzw. dem Kontaktblech 3 angeordnet und umfasst damit einen Flächenausschnitt, der unter Berücksichtigung der Lage und der Länge der Schweißnaht 6 möglichst klein ausgeführt ist.

Gemäß Schritt f) erfolgt ein Verbinden des Folienstapels 5 mit dem Kontaktblech 3 in dem Verbindungsbereich 10 über eine durch ein Laserschweißverfahren bei Vorliegen des Unterdrucks erzeugte Schweißnaht 6. Die Schweißnaht 6 weist insbesondere eine Länge entlang einer Schweißrichtung 23 auf.

Fig. 6 zeigt eine zweite Ausführungsvariante einer Vorrichtung 31 gemäß der Schritte e) und f) in einer Seitenansicht. Im Unterschied zur ersten Ausführungsvariante umfasst die Unterdruckvorrichtung 11 nur eine Kammer 12, in der Folienstapel 5 und das Kontaktblech 3 angeordnet sind. Durch das Anordnen des Folienstapels 5 und des Kontaktblechs 3 in der Kammer 12 kann Luft ggf. auch aus den Bereichen zwischen den Folien 17 des Folienstapels 5 bzw. zwischen dem Folienstapel 5 und dem Kontaktblech 3 entfernt werden. Allerdings ist so das Volumen der Kammer 12 recht groß und es müssen damit große Mengen Luft, ggf. für jedes Bauteil 1, entfernt werden.

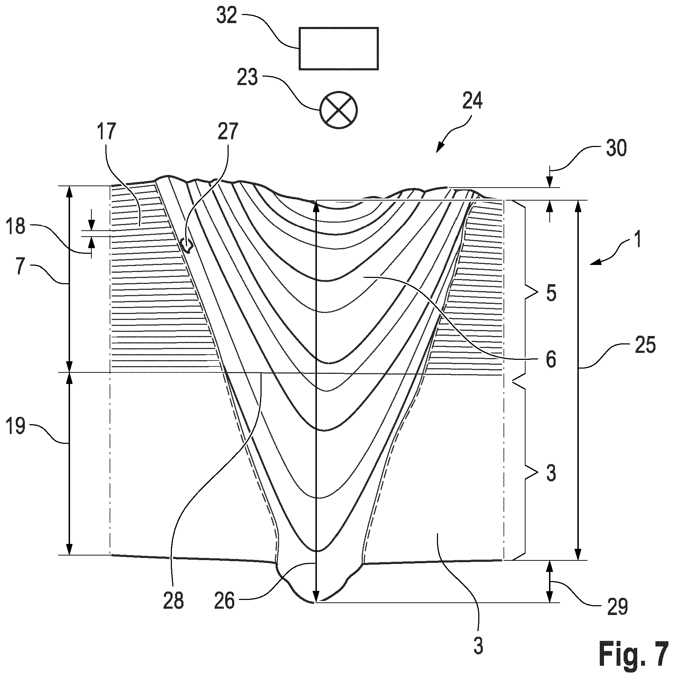

Fig. 7 zeigt einen Querschnitt 24 durch eine Schweißnaht 6, die durch das beschriebene Verfahren erzeugt wurde, im Schnitt.

Das Bauteil 1 umfasst ein Kontaktblech 3 mit einer zweiten Dicke 19 und einen Folienstapel 5, die eine Überlappverbindung ausbilden. Der Folienstapel 5 bildet dabei eine Oberseite und ist hin zur Strahlquelle (der Laservorrichtung 32) orientiert. Die Schweißnaht 6 umfasst nahezu keine Poren 27, damit eine geringe Porosität, eine leichte Überhöhung 29 der Wurzel sowie eine leichte Unterwölbung 30 der Decklage der Schweißnaht 6. Die zweite Materialstärke 26 ist sogar größter als die erste Materialstärke 25.

Bei der dargestellten Überlappverbindung ist das Material der Schweißnaht 6 entlang einer kürzesten Verbindungslinie 28 durch die Schweißnaht 6 zwischen dem Folienstapel 5 und dem Kontaktblech 3, bzw. entlang der Trennlinie zwischen Folienstapel 5 und Kontaktblech 3, porenfrei. Alle Folien 17 des Folienstapels 5 sind an die Schweißnaht 6 angebunden. Die Schweißnaht 6 ist rissfrei, randkerbenfrei und wurzelkerbenfrei.

Das Material der Folien 17 des Folienstapels 5 und das Material des Kontaktblechs 3 umfasst jeweils zu mindestens 99,0 % Aluminium. Die Folien 17 weisen jeweils eine erste Dicke 18 auf.

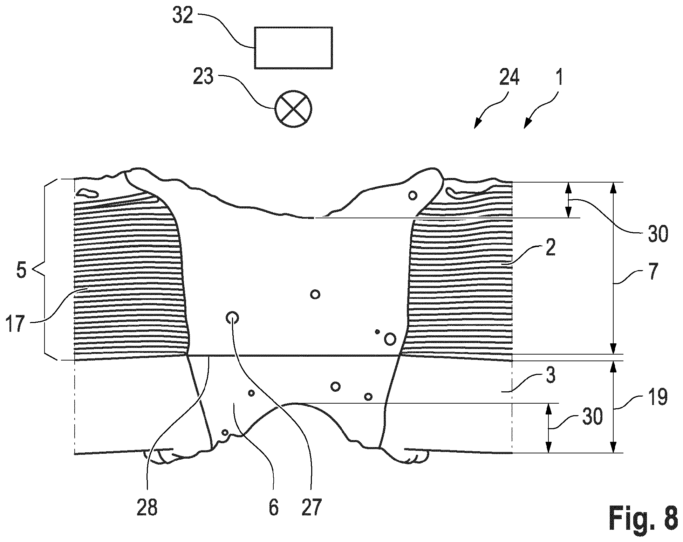

Fig. 8 zeigt einen Querschnitt 24 durch eine weitere Schweißnaht 6, die durch das beschriebene Verfahren erzeugt wurde, im Schnitt.

Das Bauteil 1 umfasst ein Kontaktblech 3 mit einer zweiten Dicke 19 und einen Folienstapel 5, die eine Überlappverbindung ausbilden. Der Folienstapel 5 bildet dabei eine Oberseite und ist hin zur Strahlquelle (der Laservorrichtung 32) orientiert. Die Schweißnaht 6 umfasst nur sehr kleine Poren 27, damit eine geringe Porosität, eine leichte Unterwölbung 30 der Wurzel sowie eine leichte Unterwölbung 30 der Decklage der Schweißnaht 6. Die zweite Materialstärke 26 ist nur geringfügig geringer als die erste Materialstärke 25.

Bei der dargestellten Überlappverbindung ist das Material der Schweißnaht 6 entlang einer kürzesten Verbindungslinie 28 durch die Schweißnaht 6 zwischen dem Folienstapel 5 und dem Kontaktblech 3, bzw. entlang der Trennlinie zwischen Folienstapel 5 und Kontaktblech 3, porenfrei. Alle Folien 17 des Folienstapels 5 sind an die Schweißnaht 6 angebunden. Die Schweißnaht 6 ist rissfrei, randkerbenfrei und wurzelkerbenfrei.

Das Material der Folien 17 des Folienstapels 5 und das Material des Kontaktblechs 3 umfasst jeweils zu mindestens 99,0 % Aluminium. Die Folien 17 weisen jeweils eine erste Dicke 18 auf.

### Bezugszeichenliste

- 1: Bauteil
- 2: Zellfolie
- 3: Kontaktblech
- 4: Anbindungsabschnitt
- 5: Folienstapel
- 6: Schweißnaht
- 7: Stapelhöhe
- 8: Kompaktionsvorrichtung
- 9: Verbindungsposition
- 10: Verbindungsbereich
- 11: Unterdruckvorrichtung
- 12: erste Kammer
- 13: zweite Kammer
- 14: erster Vorrichtungsteil
- 15: zweiter Vorrichtungsteil
- 16: Dichtfläche
- 17: Folie
- 18: erste Dicke
- 19: zweite Dicke
- 20: Beschichtung
- 21: dritte Dicke
- 22: Laserstrahl
- 23: Schweißrichtung
- 24: Querschnitt
- 25: erste Materialstärke
- 26: zweite Materialstärke
- 27: Pore
- 28: Verbindungslinie
- 29: Überhöhung
- 30: Unterwölbung
- 31: Vorrichtung
- 32: Laservorrichtung
- 33: Siegelnaht

## Patentansprüche

1. Verfahren zur Herstellung eines Bauteils (1), wobei das Bauteil eine Vielzahl von aufeinander gestapelten Zellfolien (2) zur Speicherung elektrischer Energie und mindestens ein Kontaktblech (3) aufweist; wobei die Zellfolien (2) in einem Anbindungsabschnitt (4) einen Folienstapel (5) ausbilden und der Folienstapel (5) mit dem Kontaktblech (3) durch mindestens eine Schweißnaht (6) verbunden ist zur elektrischen Kontaktierung der Zellfolien (2) über das Kontaktblech (3), wobei das Verfahren zur Herstellung der mindestens einen Schweißnaht (6) zumindest die folgenden Schritte umfasst:
a) Bereitstellen der Zellfolien (2) und Anordnen des Folienstapels (5) mit einer Stapelhöhe (7);
b) Bereitstellen des Kontaktblechs (3);
c) Kompaktieren zumindest des Folienstapels (5) durch eine Kompaktionsvorrichtung (8);
d) Anordnen des Folienstapels (5) und des Kontaktblechs (3) zueinander in einer Verbindungsposition (9);
e) Erzeugen eines Unterdrucks zumindest in einem Verbindungsbereich (10) des Folienstapels (5) und des Kontaktblechs (3) durch eine Unterdruckvorrichtung (11);
f) Verbinden des Folienstapels (5) mit dem Kontaktblech (3) in dem Verbindungsbereich (10) über die mindestens eine durch ein Laserschweißverfahren bei Vorliegen des Unterdrucks erzeugte Schweißnaht (6);
**dadurch gekennzeichnet, dass** das Kompaktieren zumindest des Folienstapels (5) durch Beaufschlagen mit einem Druck erfolgt, der mit einer Ultraschallanregung überlagert wird.

2. Verfahren nach Patentanspruch 1, wobei die Unterdruckvorrichtung (11) zumindest eine Kammer (12, 13) umfasst, in der zumindest der Folienstapel (5) und das Kontaktblech (3) angeordnet sind.

3. Verfahren nach Patentanspruch 1, wobei die Unterdruckvorrichtung (11) einen ersten Vorrichtungsteil (14) und einen zweiten Vorrichtungsteils (15) umfasst, die jeweils eine Dichtfläche (16) mit zumindest dem Folienstapel (5) oder dem Kontaktblech (3) ausbilden; so dass die Unterdruckvorrichtung (11) zumindest zwei Kammern (12, 13) ausbildet, in denen jeweils zumindest ein Unterdruck erzeugt wird; wobei jede Kammer (12, 13) zumindest teilweise zumindest durch den Folienstapel (5) oder durch das Kontaktblech (3) gebildet wird.

4. Verfahren nach einem der vorhergehenden Patentansprüche, wobei der Folienstapel (5) durch eine Vielzahl aufeinander angeordneter Folien (17) gebildet ist, wobei jede Folie (17) eine erste Dicke (18) aufweist und die aufeinander gestapelten Folien (17) mit der jeweils ersten Dicke (18) die Stapelhöhe (7) bilden, wobei die erste Dicke (18) zwischen 4 und 30 µm beträgt und jede Folie (17) des Folienstapels (5) zumindest zu 99,0 Gew.-% entweder Kupfer oder Aluminium umfasst.

5. Verfahren nach einem der vorhergehenden Patentansprüche, wobei die Stapelhöhe (7) durch mindestens zehn aufeinander gestapelte Folien (17) gebildet wird.

6. Verfahren nach einem der vorhergehenden Patentansprüche, wobei das Kontaktblech (3) in dem Verbindungsbereich (10) eine zweite Dicke (19) aufweist, die zwischen 0,2 und 3 Millimeter beträgt und zumindest zu 99,0 Gew.-% entweder Kupfer oder Aluminium umfasst.

7. Verfahren nach einem der vorhergehenden Patentansprüche, wobei das Kontaktblech (3) eine Beschichtung (20) aufweist, die eine dritte Dicke (21) von höchstens 2 µm aufweist und die zumindest zu 99,0 Gew.-% Nickel umfasst.

8. Verfahren nach einem der vorhergehenden Patentansprüche, wobei der Unterdruck im Verbindungsbereich (10) weniger als 30 mbar beträgt.

9. Verfahren nach einem der vorhergehenden Patentansprüche, wobei die mindestens eine Schweißnaht (6) durch einen Laserstrahl (22) mit einer Wellenlänge zwischen 405 und 575 nm erzeugt wird.

10. Vorrichtung (31) zur Herstellung eines Bauteils (1), wobei das Bauteil eine Vielzahl von aufeinander gestapelten Zellfolien (2) zur Speicherung elektrischer Energie und mindestens ein Kontaktblech (3) aufweist; wobei die Zellfolien (2) in einem Anbindungsabschnitt (4) einen Folienstapel (5) ausbilden und der Folienstapel (5) mit dem Kontaktblech (3) durch mindestens eine Schweißnaht (6) verbunden ist zur elektrischen Kontaktierung der Zellfolien (2) über das Kontaktblech (3); wobei die Vorrichtung (31) zur Durchführung des Verfahrens nach einem der vorhergehenden Patentansprüche 1 bis 12 ausgeführt ist und zur Herstellung der mindestens einen Schweißnaht (6) zumindest
• eine Kompaktionsvorrichtung (8) zum Kompaktieren zumindest des Folienstapels (5),
• eine Unterdruckvorrichtung (11) zum Erzeugen eines Unterdrucks zumindest in einem Verbindungsbereich (10) des Folienstapels (5) und des Kontaktblechs (3) sowie
• eine Laservorrichtung (32) zum Verbinden des Folienstapels (5) mit dem Kontaktblech (3) in dem Verbindungsbereich (10) über mindestens eine durch ein Laserschweißverfahren bei Vorliegen des Unterdrucks erzeugte Schweißnaht (6) umfasst;
**dadurch gekennzeichnet, dass** das Kompaktieren ein Beaufschlagen mit einem Druck und mit einer Ultraschallanregung umfasst.

## Claims

1. Method for producing a component (1), wherein the component has a multiplicity of cell foils (2), which are stacked on top of one another, for storing electrical energy and at least one contact sheet (3); wherein the cell foils (2) form a foil stack (5) in an attachment portion (4) and the foil stack (5) is connected to the contact sheet (3) by at least one weld seam (6) for electrical contacting of the cell foils (2) via the contact sheet (3), wherein the method for producing the at least one weld seam (6) comprises at least the following steps:
a) providing the cell foils (2) and arranging the foil stack (5) with a stack height (7);
b) providing the contact sheet (3);
c) compacting at least the foil stack (5) by way of a compaction device (8);
d) arranging the foil stack (5) and the contact sheet (3) relative to one another in a connecting position (9);
e) generating a negative pressure at least in a connecting region (10) of the foil stack (5) and of the contact sheet (3) by way of a negative-pressure device (11);
f) connecting the foil stack (5) to the contact sheet (3) in the connecting region (10) by way of the at least one weld seam (6) generated by a laser welding method in the presence of the negative pressure;
**characterized in that** the compacting at least of the foil stack (5) is effected by applying a pressure which is superimposed with an ultrasonic excitation.

2. Method according to Patent Claim 1, wherein the negative-pressure device (11) comprises at least one chamber (12, 13) in which at least the foil stack (5) and the contact sheet (3) are arranged.

3. Method according to Patent Claim 1, wherein the negative-pressure device (11) comprises a first device part (14) and a second device part (15), each of which form a sealing surface (16) with at least the foil stack (5) or the contact sheet (3); with the result that the negative-pressure device (11) forms at least two chambers (12, 13) in which in each case at least one negative pressure is generated; wherein each chamber (12, 13) is at least partially formed at least by the foil stack (5) or by the contact sheet (3).

4. Method according to one of the preceding patent claims, wherein the foil stack (5) is formed by a multiplicity of foils (17) which are arranged on top of one another, wherein each foil (17) has a first thickness (18) and the foils (17) which are stacked on top of one another and each have the first thickness (18) form the stack height (7), wherein the first thickness (18) is between 4 and 30 µm and each foil (17) of the foil stack (5) comprises either copper or aluminium at least to an extent of 99.0% by weight.

5. Method according to one of the preceding patent claims, wherein the stack height (7) is formed by at least ten foils (17) stacked on top of one another.

6. Method according to one of the preceding patent claims, wherein the contact sheet (3) in the connecting region (10) has a second thickness (19) which is between 0.2 and 3 millimetres and comprises either copper or aluminium at least to an extent of 99.0% by weight.

7. Method according to one of the preceding patent claims, wherein the contact sheet (3) has a coating (20) which has a third thickness (21) of at most 2 µm and comprises nickel at least to an extent of 99.0% by weight.

8. Method according to one of the preceding patent claims, wherein the negative pressure in the connecting region (10) is less than 30 mbar.

9. Method according to one of the preceding patent claims, wherein the at least one weld seam (6) is generated by a laser beam (22) having a wavelength of between 405 and 575 nm.

10. Device (31) for producing a component (1), wherein the component has a multiplicity of cell foils (2), which are stacked on top of one another, for storing electrical energy and at least one contact sheet (3); wherein the cell foils (2) form a foil stack (5) in an attachment portion (4) and the foil stack (5) is connected to the contact sheet (3) by at least one weld seam (6) for electrical contacting of the cell foils (2) via the contact sheet (3); wherein the device (31) is embodied for carrying out the method according to one of the preceding Patent Claims 1 to 12 and, in order to produce the at least one weld seam (6), comprises at least
• a compaction device (8) for compacting at least the foil stack (5),
• a negative-pressure device (11) for generating a negative pressure at least in a connecting region (10) of the foil stack (5) and of the contact sheet (3), and
• a laser device (32) for connecting the foil stack (5) to the contact sheet (3) in the connecting region (10) by way of at least one weld seam (6) generated by a laser welding method in the presence of the negative pressure;
**characterized in that** the compacting comprises applying a pressure and an ultrasonic excitation.

## Revendications

1. Procédé de fabrication d'un composant (1), le composant possédant une pluralité de feuilles cellulaires (2) empilées les unes sur les autres pour le stockage d'énergie électrique et au moins une tôle de contact (3) ; les feuilles cellulaires (2) formant un empilement de feuilles (5) dans une portion de connexion (4) et l'empilement de feuilles (5) étant relié à la tôle de contact (3) par au moins un cordon de soudure (6) en vue de la mise en contact électrique des feuilles cellulaires (2) par le biais de la tôle de contact (3), le procédé de réalisation dudit au moins un cordon de soudure (6) comprenant au moins les étapes suivantes :
a) mise à disposition des feuilles cellulaires (2) et disposition de l'empilement de feuilles (5) avec une hauteur de pile (7) ;
b) mise à disposition de la plaque de contact (3) ;
c) compactage d'au moins l'empilement de feuilles (5) à l'aide d'un dispositif de compactage (8) ;
d) arrangement de l'empilement de feuilles (5) et de la plaque de contact (3) l'un par rapport à l'autre dans une position de liaison (9) ;
e) génération d'une dépression au moins dans une zone de liaison (10) de l'empilement de feuilles (5) et de la tôle de contact (3) par un dispositif de dépression (11) ;
f) jonction de l'empilement de feuilles (5) avec la tôle de contact (3) dans la zone de liaison (10) par l'intermédiaire de l'au moins un cordon de soudure (6) réalisé par un procédé de soudage au laser en présence de la dépression ;
**caractérisé en ce que** le compactage d'au moins l'empilement de feuilles (5) s'effectue par application d'une pression à laquelle est superposée une excitation ultrasonique.

2. Procédé selon la revendication 1, le dispositif de dépression (11) comprenant au moins une chambre (12, 13) dans laquelle sont disposés au moins l'empilement de feuilles (5) et la tôle de contact (3).

3. Procédé selon la revendication 1, le dispositif de dépression (11) comprenant une première partie de dispositif (14) et une deuxième partie de dispositif (15), qui forment chacune une surface d'étanchéité (16) avec au moins l'empilement de films (5) ou la tôle de contact (3) ; de sorte que le dispositif de dépression (11) forme au moins deux chambres (12, 13) dans lesquelles est respectivement générée au moins une dépression ; chaque chambre (12, 13) étant formée au moins partiellement au moins par l'empilement de feuilles (5) ou par la tôle de contact (3).

4. Procédé selon l'une des revendications précédentes, l'empilement de feuilles (5) étant formé par une pluralité de feuilles (17) disposées les unes sur les autres, chaque feuille (17) présentant une première épaisseur (18) et les feuilles (17) empilées les unes sur les autres avec la première épaisseur (18) respective formant la hauteur d'empilement (7), la première épaisseur (18) étant comprise entre 4 et 30 µm et chaque feuille (17) de l'empilement de feuilles (5) comprenant au moins 99,0 % en poids soit de cuivre, soit d'aluminium.

5. Procédé selon l'une des revendications précédentes, la hauteur d'empilement (7) étant formée par au moins dix feuilles (17) empilées les unes sur les autres.

6. Procédé selon l'une des revendications précédentes, la tôle de contact (3) présentant une deuxième épaisseur (19) dans la zone de liaison (10), qui est comprise entre 0,2 et 3 millimètres et comprenant au moins 99,0 % en poids soit de cuivre, soit d'aluminium.

7. Procédé selon l'une des revendications précédentes, la tôle de contact (3) possédant un revêtement (20) qui présente une troisième épaisseur (21) d'au plus 2 µm et qui comprend au moins 99,0 % en poids de nickel.

8. Procédé selon l'une des revendications précédentes, la dépression dans la zone de liaison (10) étant inférieure à 30 mbar.

9. Procédé selon l'une des revendications précédentes, l'au moins un cordon de soudure (6) étant produit par un faisceau laser (22) ayant une longueur d'onde comprise entre 405 et 575 nm.

10. Dispositif (31) de fabrication d'un composant (1), le composant possédant une pluralité de feuilles cellulaires (2) empilées les unes sur les autres pour le stockage d'énergie électrique et au moins une tôle de contact (3) ; les feuilles cellulaires (2) formant un empilement de feuilles (5) dans une portion de connexion (4) et l'empilement de feuilles (5) étant relié à la tôle de contact (3) par au moins un cordon de soudure (6) en vue de la mise en contact électrique des feuilles cellulaires (2) par le biais de la tôle de contact (3) ; le dispositif (31) étant conçu pour mettre en œuvre le procédé selon l'une des revendications 1 à 12 précédentes et, en vue de réaliser l'au moins un cordon de soudure (6), comprenant au moins
• un dispositif de compactage (8) destiné à compacter au moins l'empilement de feuilles (5),
• un dispositif de dépression (11) destiné à générer une dépression au moins dans une zone de liaison (10) de l'empilement de feuilles (5) et de la tôle de contact (3) ainsi que
• un dispositif laser (32) destiné à relier l'empilement de feuilles (5) à la tôle de contact (3) dans la zone de liaison (10) par le biais d'au moins un cordon de soudure (6) généré par un procédé de soudage au laser en présence de la dépression ;
**caractérisé en ce que** le compactage comprend l'application d'une pression et d'une excitation ultrasonique.
